# EUROPEAN PATENT SPECIFICATION

(11) **EP 2 711 534 B1**
(45) Date of publication and mention of the grant of the patent: **21.03.2018**
(21) Application number: 12785882.7
(22) Date of filing: 14.05.2012
(51) Int. Cl.: F02M 35/10, F02M 35/12, B29C 65/00

(54) **RESONATOR**
RESONATOR
RÉSONATEUR

(30) Priority: 17.05.2011 JP 2011110449
(43) Date of publication of application: 26.03.2014
(73) Proprietor: Nifco Inc., Kanagawa 239-8560 (JP)
(72) Inventor: KOGA, Toru, Kanagawa, 239-8560 (JP)
(74) Representative: Dr. Gassner & Partner mbB
(86) International application number: PCT/JP2012/062323
(87) International publication number: WO 2012/157613

(56) References cited:
- DE-A1-102004 015 881
- JP-A- H10 193 460
- JP-A- 2001 199 228
- JP-A- 2004 316 468
- JP-A- 2007 008 134
- JP-A- 2008 082 278
- JP-B2- 3 276 517
- JP-U- 63 090 063

## Description

### Technical Field

The present invention relates to an improvement of a resonator with the features of the preamble of claim 1, that is provided in an intake path of an engine and forms a part of the intake path.

### Background Art

There have been resonators formed by welding flanges formed in open end portions of a pair of container members to each other, see JP 3276517 B2. In such resonators, it is understood that a protrusion formed in one flange of the pair of the container members is received in a groove formed in the other flange of the pair of container members, and is melted for melt-welding. However, in the melt-welding in which the protrusion is simply received in the groove, there is no guarantee that the leakage of the molten resin to the outside of a welding position, in particular, the leakage to the outside of the resonator is suppressed, and such a leakage becomes a factor of a decrease in welding strength.

JP 2004316468 A discloses an intake manifold comprising a welding surface of the groove and a protrusion.

JP H10 193460 A discloses a resin part wherein two components are joint by vibration welding.

### Summary of Invention

### Technical Problem

A main object to be achieved by the invention is to provide a resonator made of synthetic resin to be suitably formed by melt-welding of two box forming bodies.

### Solution to Problem

In order to achieve the above object, the invention provides a resonator made of synthetic resin provided in an intake path of an engine with the features of claim 1.

According to such a configuration, at the time of melt-welding, the circumferential wall portion of the first box forming body and the circumferential wall portion of the second box forming body can abut against each other so as not to generate a gap between the outer wall surfaces thereof, and it is possible to effectively prevent a situation in which a molten resin caused by such melt-welding leaks to the outside of the resonator and causes burrs.

If the circumferential groove of the first box forming body is assumed to have the deepest portion on one groove wall side wall located inside the first box forming body, and have an inclined bottom surface that makes the circumferential groove shallow as it goes toward the other groove wall between the deepest portion and the other circumferential groove, it is possible to perform the welding in such a manner that the molten resin caused by the melt-welding is induced to the inside of the first box forming body, that is, to the inside of the air chamber of the resonator to be generated by such an inclined bottom surface, and it is possible to more effectively prevent the leakage of the molten resin to the outside of such a resonator.

Furthermore, when the circumferential wall of the first box forming body and the circumferential wall of the second box forming body abut against each other, a gap may be formed between the circumferential protrusion and one groove wall located inside the first box forming body in the circumferential groove. In this way, the welding can be performed while keeping the molten resin caused by the welding in the gap, and it is possible to firmly weld the first box forming body and the second box forming body in the upper end portion of the circumferential wall portion, while preventing the leakage of the molten resin to the outside of the resonator.

Furthermore, a distance between the inner wall surface in the circumferential wall portion of the first box forming body and the circumferential groove may be smaller than a distance between the outer wall surface and the circumferential groove. In such a case, it is possible to set the inside and outside dimensions of the upper end portion to the minimum requirements, while ensuring high strength of the portion that is located outside the resonator in the upper end portion of the circumferential wall portion of the first box forming body.

### Advantageous Effects of Invention

According to the invention, it is possible to suitably form a resonator made of a synthetic resin by the melt-welding of the two box forming bodies.

### Brief Description of Drawings

Fig. 1 is a perspective view of a resonator according to an embodiment of the invention.
Fig. 2 is a cross-sectional view taken along line A-A in Fig. 1.
Fig. 3 is a perspective view illustrating a state in which a first box forming body and a second box forming body which form the resonator are separated from each other.
Fig. 4 is a plan configuration view illustrating the resonator and a slider of a jig used to produce the resonator.
Fig. 5 is a cross-sectional view taken along line B-B in Fig. 4.
Fig. 6 is a cross-sectional configuration view of main parts illustrating a state immediately before the first box forming body and the second box forming body that form the resonator are melt-welded to each other.
Fig. 7 is a cross-sectional configuration view of main parts illustrating a state immediately after the first box forming body and the second box forming body that form the resonator are melt-welded to each other.

### Description of Embodiments

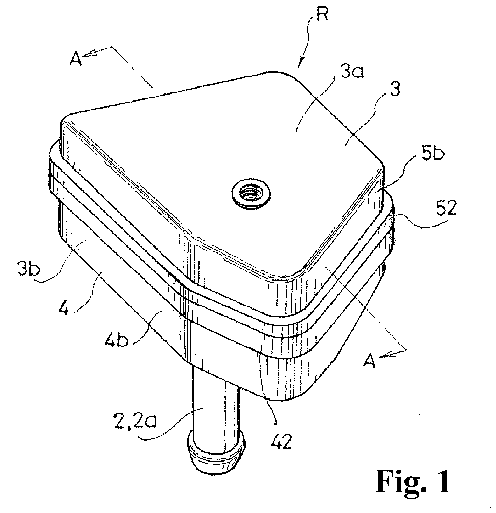

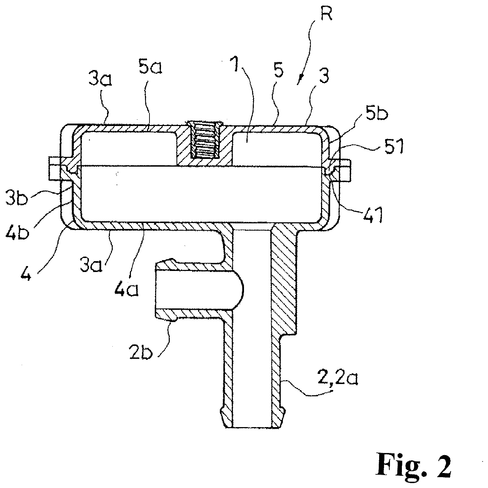

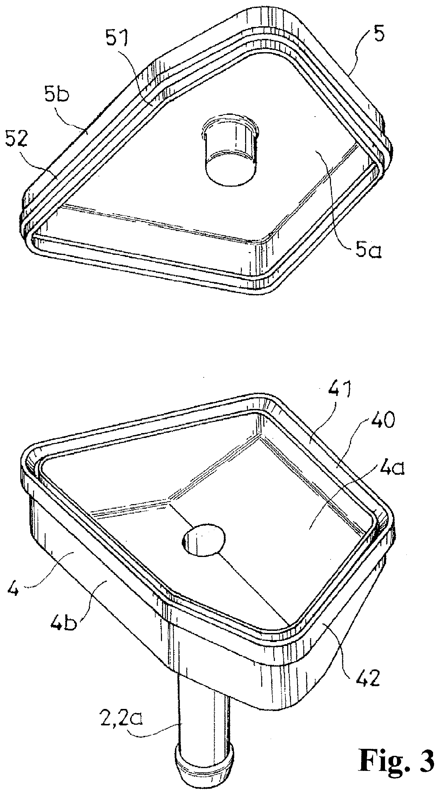

Hereinafter, an exemplary embodiment of the invention will be described with reference to Figs. 1 to 7. A resonator R according to this embodiment forms a part of an intake path provided in the intake path of the engine. In the illustrated example, the resonator R has a structure that is disposed between a canister and an intake manifold in the intake path.

Such a resonator R has an air chamber 1 and a tube portion 2 communicating therewith. The air chamber 1 is formed by a flat box-like body 3. The tube portion 2 includes a main pipe 2a that is integrally connected to one of wide surfaces 3a of the box-like body 3 at one tube end and communicates with the air chamber 1, and a branched pipe 2b that is integrally connected to the main pipe 2a at one tube end between one tube end and the other tube end of the main pipe 2a and communicates with the main pipe 2a. The resonator R is configured to form a part of the intake path, by connecting the other tube end of the main pipe 2a to one configuration tube (not illustrated) of the intake path, and connecting the other tube end of the branched pipe 2b to the other configuration tube (not illustrated) of the intake path tube.

The box-like body 3 having the interior formed as the air chamber 1 is formed by a combination of a first box forming body 4 and a second box forming body 5. More specifically, the box-like body 3 is formed by welding a circumferential wall portion 4b of the first box forming body 4, and a circumferential wall portion 5b of the second box forming body 5, while abutting the circumferential wall portions against each other. The first box forming body 4 includes a bottom surface portion 4a, and the circumferential wall portion 4b surrounding the bottom surface portion 4a. The second box forming body 5 includes a bottom surface portion 5a, and the circumferential wall portion 5b surrounding the bottom surface portion 5a.

In the illustrated example, the box-like body 3 has two wide surfaces 3a, 3a, and a narrow side surface 3b extending between the two wide surfaces 3a, 3a. The wide surfaces 3a of the box-like body 3 are formed by the bottom surface portions 4a, 5a of the first box forming body 4 and the second box forming body 5, and the narrow side surface 3b of the box-like body 3 is formed by the circumferential wall portions 4b, 5b of the first box forming body 4 and the second box forming body 5.

A circumferential groove 41 is formed in an upper end portion 40 of the circumferential wall portion 4b of the first box forming body 4, and a circumferential protrusion 51 is formed in an upper end portion 50 of the circumferential wall portion 5b of the second box forming body 5. The circumferential protrusion 51 is received in the circumferential groove 41 and is melt-welded to a groove bottom 41e of the circumferential groove 41 during the abutment.

In the illustrated example, both the first box forming body 4 and the second box forming body 5 have flange portions 42 and 52 projecting outward at the upper end portions 40 and 50 of the circumferential wall portions 4b and 5b. Moreover, in the first box forming body 4, the circumferential groove 41 is formed in an engraved shape on the upper end surface 45 located between an outer wall surface 43 of the circumferential wall portion 4b formed by the flange portions 42 and the inner wall surface 44 of the circumferential wall portion 4b. Furthermore, in the second box forming body 5, the circumferential protrusion 51 is projected from an upper end surface 55 located between an outer wall surface 53 of the circumferential wall portion 5b formed by the flange portion 52 and an inner wall surface 54 of the circumferential wall portion 5b.

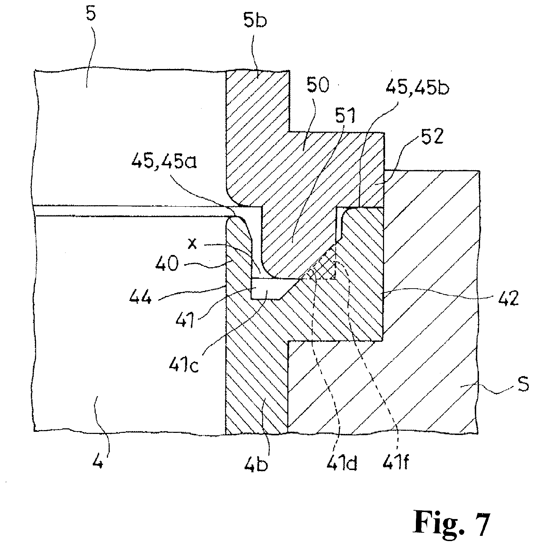

Moreover, in the embodiment, the upper end surface 45b located between the outer wall surface 43 of the circumferential wall portion 4b of the first box forming body 4 and the circumferential groove 41 is located above the upper end surface 45a located between the inner wall surface and the circumferential groove 41 (Fig. 7).

Thus, in the embodiment, during melt-welding, the circumferential wall portion 4b of the first box forming body 4 and the circumferential wall portion 5b of the second box forming body 5 can abut against each other without generating a gap between the outer wall surfaces 43 and 53, and it is possible to effectively prevent a situation in which the molten resin caused by such melt-welding leaks to the outside of the resonator R and causes burrs.

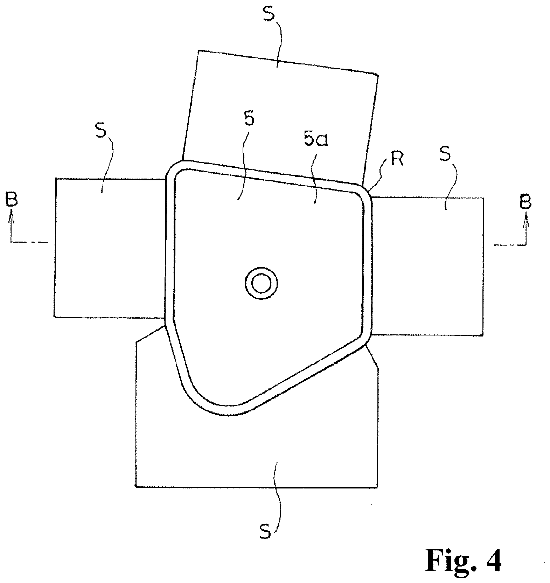

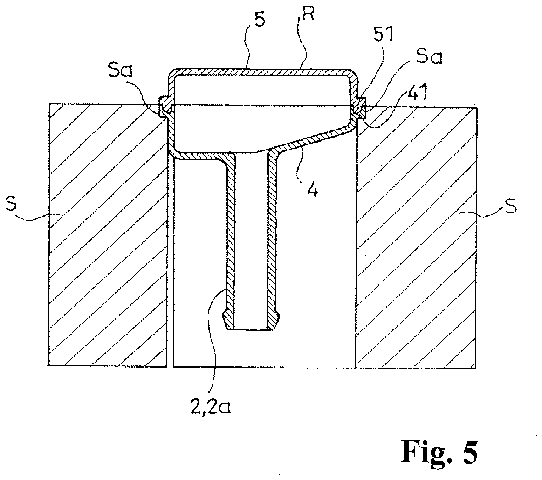

In this embodiment, the tube portion 2 is provided in the first box forming body 4. Moreover, the melt-welding is performed in such a manner that after the first box forming body 4 is supported on a jig with the tube portion 2 facing downward, the second box forming body 5 is lowered on the first box forming body 4. The jig includes a receiving member S provided with a pressure welding portion Sa for the outer wall surface 43 of the circumferential wall portion 4b of the first box forming body 4, and the first box forming body 4 is supported by being pressed by the four receiving members S ... S (Figs. 4 and 5). After the welding is finished, the receiving members S slide, and the suppression of the first box forming body 4 is released. The melt-welding is performed by melting the protruding end side of the circumferential protrusion 51 using the known welding methods such as ultrasonic welding.

Furthermore, in the embodiment, the circumferential groove 41 of the first box forming body 4 has a deepest portion 41c on one groove wall 41a side located inside the first box forming body 4, and has an inclined bottom surface 41d that makes the circumferential groove 41 shallow as it goes toward the other groove wall 41b between the deepest portion 41c and the other groove wall 41b. That is, the groove bottom 41e of the circumferential groove 41 is formed by the deepest portion 41c and the inclined bottom surface 41d.

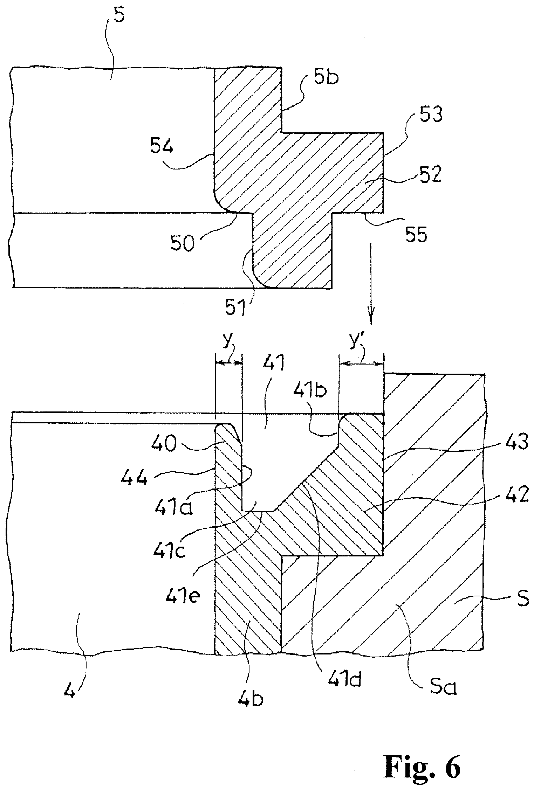

Specifically, in the illustrated example, the circumferential groove 41 forms the groove bottom 41e in the deepest portion 41c as a horizontal plane in a direction perpendicular to the inner wall surface 44, and forms the groove bottom 41e between the deepest portion 41c and the other groove wall 41b as the inclined bottom surface 41d. Moreover, the circumferential protrusion 51 is adapted to be melt-welded by being pressed against the inclined bottom surface 41d (Figs. 6 and 7 / the welding position is indicated by reference numeral 41f in Fig. 7).

Thus, in the embodiment, the welding can be performed in such a manner that the molten resin caused by the welding is induced to the inside of the first box forming body 4, that is, to the inside of the air chamber 1 of the resonator R to be generated by the inclined bottom surface 41d, and it is possible to more effectively prevent the leakage of the molten resin to the outside of such a resonator R.

In addition, in the embodiment, when the circumferential wall portion 4b of the first box forming body 4 and the circumferential wall portion 5b of the second box forming body 5 abut against each other, a gap x is formed between the circumferential protrusion 51 and one groove wall 41a located inside the first box forming body 4 in the circumferential groove 41 (Fig. 7).

Thus, in this embodiment, it is possible to perform the melt-welding while keeping the molten resin caused by the melt-welding in the gap x, and it is possible to firmly melt-weld the first box forming body 4 and the second box forming body 5 in the upper end portions 40 and 50 of the circumferential wall portions 4b and 5b, while preventing the leaking of the molten resin to the outside of the resonator R.

In addition, in the embodiment, a distance y between the inner wall surface 44 in the circumferential wall portion 4b of the first box forming body 4 and the circumferential groove 41 is smaller than a distance y' between the outer wall surface 43 and the circumferential groove 41 (Fig. 6).

Thus, in the embodiment, the inside and outside dimensions of the upper end portion 40 is set to the minimum requirement, while ensuring high strength of the portion that is located outside the resonator R in the upper end portion 40 of the circumferential wall portion 4b of the first box forming body 4.

The entire contents of the specification, claims, drawings and abstract of Japanese patent application No. 2011-110449 filed on May 17, 2011 are cited here, and are incorporated as disclosure of the specification of the invention.

## Claims

1. A resonator (R) made of a synthetic resin provided in an intake path of an engine, comprising:
an air chamber (1) formed by melt-welding a circumferential wall portion (4b) of a first box forming body (4) and a circumferential wall portion (5b) of a second box forming body (5), while abutting the circumferential wall portions (4b, 5b) against each other, the first box forming body (4) including a bottom surface portion (4a) and the circumferential wall portion (4b) surrounding the bottom surface portion (4a), and the second box forming body (5) including a bottom surface portion (5a) and the circumferential wall portion (5b) surrounding the bottom surface portion (5a),
wherein a circumferential groove (41) is formed on an upper end portion (40) of the circumferential wall portion (4b) of the first box forming body (4), and a circumferential protrusion (51) is formed in an upper end portion (50) of the circumferential wall portion (5b) of the second box forming body (5), the circumferential protrusion (51) being melt-welded to a groove bottom (41e) of the circumferential groove (41) by being received in the circumferential groove (41) during abutment, and
an upper end surface (45b) between an outer wall surface (43) in the circumferential wall portion (4b) of the first box forming body (4) and the circumferential groove (41) is located above the upper end surface (45a) between an inner wall surface (44) and the circumferential groove (41),
**characterized in that** the circumferential groove (41) of the first box forming body (4) has a deepest portion (41c) on one groove wall (41a) located inside the first box forming body (4), and has an inclined bottom surface (41d) that makes the circumferential groove (41) shallow as it goes toward the other groove wall (41b) between the deepest portion (41c) and the other groove wall (41b), and
the circumferential protrusion (51) is adapted to be melt-welded by being pressed against the inclined bottom surface (41d) so that the welding can be performed in such a manner that the molten resin caused by the welding is induced to the inside of the first box forming body (4) by the inclined bottom surface (41d), to prevent a leakage of the molten resin to the outside of the resonator (R),
wherein the circumferential groove (41) forms a groove bottom (41e) in the deepest portion (41c) as a horizontal plane in a direction perpendicular to the inner wall surface (44), and forms the groove bottom (41e) between the deepest portion (41c) and the other groove wall (41b) as the inclined bottom surface (41d).

2. The resonator (R) according to claim 1, wherein when the circumferential wall portion (4b) of the first box forming body (4) and the circumferential wall portion (5b) of the second box forming body (5) abut against each other, a gap (x) is formed between the circumferential protrusion (51) and one groove wall (41a) located inside the first box forming body (4) in the circumferential groove (41).

3. The resonator (R) according to claim 1 or 2, wherein a distance (y) between the inner wall surface (44) in the circumferential wall portion (4b) of the first box forming body (4) and the circumferential groove (41) is smaller than a distance (y') between the outer wall surface (43) and the circumferential groove (41) thereof.

## Patentansprüche

1. Aus einem synthetischen Harz hergestellter und in einem Ansaugweg eines Motors bereitgestellter Resonator (R), der folgendes aufweist:
eine Luftkammer (1), die durch Schmelzschweißen eines umlaufenden Wandabschnitts (4b) eines ersten ein Gehäuse bildenden Körpers (4) und eines umlaufenden Wandabschnitts (5b) eines zweiten ein Gehäuse bildenden Körpers (5), wobei die umlaufenden Wandabschnitte (4b, 5b) aneinander stoßen, ausgebildet ist, wobei der erste Gehäuse bildende Körper (4) einen Bodenflächen-Abschnitt (4a) aufweist und der umlaufende Wandabschnitt (4b) den Bodenflächenabschnitt (4a) umgibt, und der zweite Gehäuse bildende Körper (5) einen Bodenflächenabschnitt (5a) aufweist und der umlaufende Wandabschnitt (5b) den Bodenflächenabschnitt (5a) umgibt,
wobei eine umlaufende Nut (41) auf einem oberen Endabschnitt (40) des umlaufenden Wandabschnitts (4b) des ersten Gehäuse bildenden Körpers (4) ausgebildet ist, und ein umlaufender Vorsprung (51) in einem oberen Endabschnitt (50) des umlaufenden Wandabschnitts (5b) des zweiten Gehäuse bildenden Körpers (5) ausgebildet ist, wobei der umlaufende Vorsprung (51) an einen Nutboden (41 e) der umlaufenden Nut (41) durch Aufnahme in der umlaufenden Nut (41) beim Aufliegen schmelzverschweißt wird,
und eine obere Endfläche (45b) zwischen einer äußeren Wandfläche (43) in dem umlaufenden Wandabschnitt (4b) des ersten Gehäuse bildenden Körpers (4) und der umlaufenden Nut (41) über der oberen Endfläche (45a) zwischen einer inneren Wandfläche (44) und der umlaufenden Nut (41) angeordnet ist, **dadurch gekennzeichnet, dass** die umlaufende Nut (41) des ersten Gehäuse bildenden Körpers (4) einen tiefsten Abschnitt (41c) auf einer im Inneren des ersten Gehäuse bildenden Körpers (4) angeordneten Nutwand (41a) aufweist, und eine geneigte Bodenfläche (41d) aufweist, die die umlaufende Nut (41), wenn sie in Richtung der anderen Nutwand (41b) verläuft, zwischen dem tiefsten Abschnitt (41c) und der anderen Nutwand (41b) abflacht, und
wobei der umlaufende Vorsprung (51) dazu ausgelegt ist, durch Pressen gegen die geneigte Bodenfläche (41d) schmelzverschweißt zu werden, so dass das Schweißen so durchgeführt werden kann, dass das durch das Schweißen geschmolzene Harz hin zum Inneren des ersten Gehäuse bildenden Körpers (4) durch die geneigte Bodenfläche (41d) geleitet wird, um ein Austreten des geschmolzenen Harzes hin zur Außenseite des Resonators (R) zu verhindern,
wobei die umlaufende Nut (41) einen Nutboden (41e) in dem tiefsten Abschnitt (41c) als eine horizontale Ebene in einer Richtung senkrecht zur inneren Wandfläche (44) ausbildet, und den Nutboden (41e) zwischen dem tiefsten Abschnitt (41c) und der äußeren Nutwand (41b) als die geneigte Bodenfläche (41d) ausbildet.

2. Resonator (R) nach Anspruch 1, wobei, wenn der umlaufende Wandabschnitt (4b) des ersten Gehäuse bildenden Körpers (4) und der umlaufende Wandabschnitt (5b) des zweiten Gehäuse bildenden Körpers (5) aneinanderstoßen, ein Spalt (x) zwischen dem umlaufenden Vorsprung (51) und einer Nutwand (41a), die im Inneren des ersten Gehäuse bildenden Körpers (4) in der umlaufenden Nut (41) angeordnet ist, ausgebildet ist.

3. Resonator (R) nach Anspruch 1 oder 2, wobei ein Abstand (y) zwischen der inneren Wandfläche (44) in dem umlaufenden Wandabschnitt (4b) des ersten Gehäuse bildenden Körpers (4) und der umlaufenden Nut (41) kleiner ist als ein Abstand (y') zwischen der Außenwandfläche (43) und deren umlaufender Nut (41).

## Revendications

1. Résonateur (R) consistant en une résine synthétique, disposé dans un passage d'admission d'un moteur, comportant:
une chambre d'air (1) constituée par soudage par fusion d'une partie de paroi circonférentielle (4b) d'un premier corps formant boîtier (4) et une partie de paroi circonférentielle (5b) d'un second corps formant boîtier (5) tandis que les parties de paroi circonférentielles (4b, 5b) viennent en butée l'une contre l'autre, le premier corps formant boîtier (4) comportant une partie de surface inférieure (4a) et la partie de paroi circonférentielle (4b) entourant la partie de surface inférieure (4a), et le second corps formant boîtier (5) comportant une partie de surface inférieure (5a) et la partie de paroi circonférentielle (5b) entourant la partie de surface inférieure (5a),
en ce qu'une rainure circonférentielle (41) est formée sur une partie d'extrémité supérieure (40) de la partie de paroi circonférentielle (4b) du premier corps formant boîtier (4), et une partie saillante circonférentielle (51) est formée sur une partie d'extrémité supérieure (50) de la partie de paroi circonférentielle (5b) du second corps formant boîtier (5), la partie saillante circonférentielle (51) étant soudée par fusion à une partie inférieure de rainure (41e) de la rainure circonférentielle (41) en étant reçue dans la rainure circonférentielle (41) pendant la butée, et
une surface d'extrémité supérieure (45b) entre une surface de paroi externe (43) dans la partie de paroi circonférentielle (4b) du premier corps formant boîtier (4) et la rainure circonférentielle (41) est située au-dessus de la surface d'extrémité supérieure (45a) entre une surface de paroi interne (44) et la rainure circonférentielle (41),
**caractérisé en ce que** la rainure circonférentielle (41) du premier corps formant boîtier (4) présente une partie plus profonde (41c) sur une paroi de rainure (41a) située à l'intérieur du premier corps formant boîtier (4), et présente une surface inférieure inclinée (41d) qui rend la rainure circonférentielle (41) superficielle lorsqu'elle va vers l'autre paroi de rainure (41b) entre la partie la plus profonde (41c) et l'autre paroi de rainure (41b), et
la partie saillante circonférentielle (51) est adaptée pour être soudée par fusion en étant pressée contre la surface inférieure inclinée (41d) pour que le soudage puisse être effectué de telle manière que la résine fondue provoquée par le soudage est induite à l'intérieur du premier corps formant boîtier (4) par la surface inférieure inclinée (41d) pour éviter une fuite de la résine fondue à l'extérieur du résonateur (R),
**en ce que** la rainure circonférentielle (41) forme une partie inférieure de rainure (41e) dans la partie la plus profonde (41c) comme plan horizontal dans une direction perpendiculaire à la surface de paroi interne (44), et forme la partie inférieure de rainure (41e) entre la plus profonde partie (41c) et l'autre paroi de rainure (41b) comme surface inférieure inclinée (41d).

2. Résonateur (R) selon la revendication 1, en ce que la partie de paroi circonférentielle (4b) du premier corps formant boîtier (4) et la partie de paroi circonférentielle (5b) du second corps formant boîtier (5) butent l'une contre l'autre, un interstice (x) est formé entre la partie saillante circonférentielle (51) et une paroi de rainure (41a) située à l'intérieur du premier corps formant boîtier (4) dans la rainure circonférentielle (41).

3. Résonateur (R) selon la revendication 1 ou 2, en ce qu'une distance (y) entre la surface de paroi interne (44) dans la partie de paroi circonférentielle (4b) du premier corps formant boîtier (4) et la rainure circonférentielle (41) est inférieure à une distance (y') entre la surface de paroi externe (43) et sa rainure circonférentielle (41).
